(19) **Europäisches Patentamt / European Patent Office / Office européen des brevets**

(11) **EP 1 523 812 B1**

(12) **EUROPEAN PATENT SPECIFICATION**

(45) Date of publication and mention of the grant of the patent:
**26.09.2012 Bulletin 2012/39**

(51) Int Cl.:
*H04L 1/06* (2006.01)    *H04B 7/04* (2006.01)
*H04L 1/00* (2006.01)    *H04B 7/06* (2006.01)

(21) Application number: **03760959.1**

(22) Date of filing: **17.06.2003**

(86) International application number:
**PCT/KR2003/001184**

(87) International publication number:
**WO 2004/002010 (31.12.2003 Gazette 2004/01)**

(54) **IMPROVED MIMO SYSTEM AND METHOD FOR   RADIO COMMUNICATION**

VERBESSERTES MIMO-SYSTEM UND -VERFAHREN FÜR FUNKKOMMUNIKATION

SYSTEME MIMO AMELIORE ET PROCEDE DE RADIOCOMMUNICATION

(84) Designated Contracting States:
**AT BE BG CH CY CZ DE DK EE ES FI FR GB GR HU IE IT LI LU MC NL PT RO SE SI SK TR**

(30) Priority: **20.06.2002  KR 2002034432**

(43) Date of publication of application:
**20.04.2005  Bulletin 2005/16**

(73) Proprietor: **LG Electronics Inc.**
**Seoul 150-010 (KR)**

(72) Inventors:
• **SIM, Dong-Hi**
  **151-903 Seoul (KR)**
• **KIM, Bong-Hoe**
  **Ahnsan, Gyunggi-Do (KR)**

(74) Representative: **Katérle, Axel et al**
**Wuesthoff & Wuesthoff**
**Patent- und Rechtsanwälte**
**Schweigerstraße 2**
**81541 München (DE)**

(56) References cited:
**EP-A- 1 185 048      WO-A1-02/03568**
**WO-A2-01/71928      WO-A2-01/95531**
**WO-A2-02/47286      JP-A- 2002 044 051**
**JP-A- 2002 084 260**

**Description**

<u>Technical Field</u>

The present invention relates to a radio communication system and, in particular, to an improved multiple input multiple output (MIMO) system and method for radio communication.

**Prior Art**

International Patent Application Publication WO 02/03568 discloses a method and system for selective mode adaptation for transmitting data by spatial multiplexing applicable in communications systems with a transmit unit having multiple transmit antennas or multiple transmit units and a receive unit having multiple receive antennas. A channel descriptor, such as channel matrix or a channel matrix filter, which has sub-descriptors corresponding to the transmit antennas, is determined and a quality parameter is chosen. The quality parameter is assigned a threshold and the sub-descriptor or sub-descriptors whose quality parameters do not meet the threshold are identified and deactivated.

**Background Art**

In the high speed wireless communication systems, one of the major concerns is to maximize the channel capacity over a wireless channel in limited bandwidth and transmission power.

Among various techniques for increasing channel capacity, the MIMO processing technique employing multiple antennas at both the transmitter and receiver has attracted a lot of attentions. The MIMO processing technique can be divided into two categories, i.e., the spatial multiplexing and the space-time coding. In the spatial multiplexing techniques, a source data stream is divided into multiple substreams, and then the substreams are simultaneously transmitted to different transmit (Tx) antennas.

The Vertical Bell Laboratories Layered Space-Time (V-BLAST) is one of popular spatial multiplexing techniques.

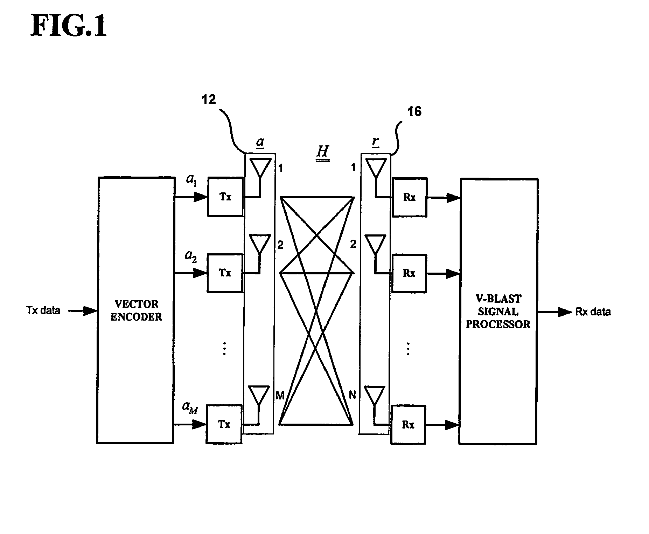

FIG. 1 is a block diagram illustrating a conventional V-BLAST system. As shown in FIG. 1, a vector encoder 10 takes a serial data stream and divides it into M substreams. Each substream is encoded into a symbol and fed to a separate Tx antennas 12. The symbols radiated from the M Tx antennas 12 are picked up by the receive (Rx) antennas 16. N Rx antennas operate co-channel and each receives the symbols radiated from all M Tx antennas. Since the substreams originate from different Tx antennas 12 that are located at slightly different positions in space, the multiple substreams are all scattered differently. These differences in scattering of the substreams allow the signal processing unit 18 of the receiver to identify and recover the transmitted substreams.

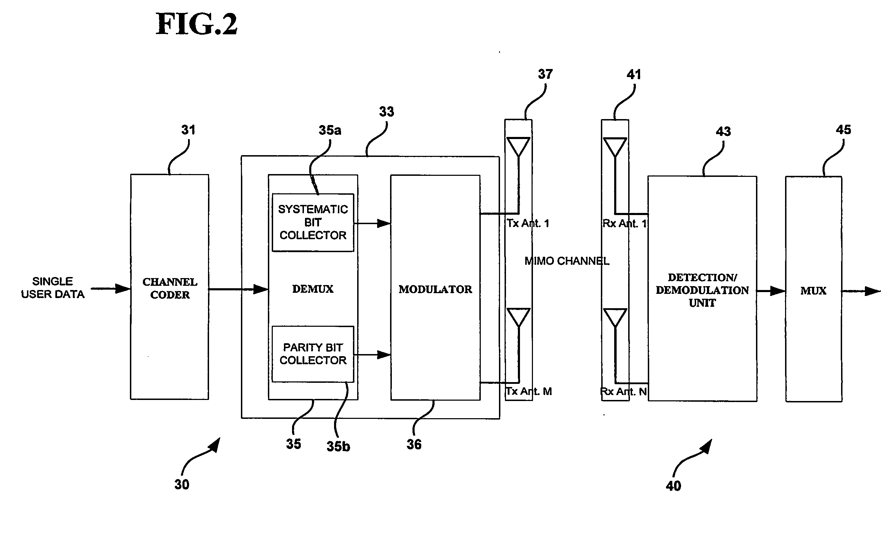

FIG. 2 is a flowchart for illustrating a diversity processing at the receiver of the V-BLAST system. Lets assume a V-BLAST system in which a transmitter having M Tx antennas transmits a single vector symbol to a receiver having N Rx antennas 16. If $\underline{a} = (a_1, a_2, ..., a_M)$ is the vector of transmitted symbols, then the received vector $\underline{r}$ can be expressed as following equation 1.

<equation 1>

$$\underline{r} = \underline{H}\,\underline{a} + \underline{v},$$

where $\underline{H}$ is the matrix channel transfer function and $\underline{v}$ is a noise vector. Also, the transfer function from Tx antenna $j$ to Rx antenna $i$ is $h_{i,j}$. The matrix channel transfer function is estimated at the receiver.

The symbols ($a_1, a_2, ..., a_M$ : M x 1 vector) transmitted by the M Tx antennas are received by N Rx antennas through the different channel $h_{i,j}$.

The symbols received through N Rx antennas are processed by a signal detection algorithm at the signal processing unit of the receiver. A symbol vector $\underline{\hat{a}}$ detected through each Rx antenna is expressed by a formula $\underline{\hat{a}} = \{k_1, k_2, ..., k_m\}$. In order to detect the symbols transmitted through the respective Tx antennas, the symbol vector received through each Rx antenna is multiplied by a weight vector $\underline{w}$.

Since M symbols are simultaneously transmitted by the M Tx antennas, M weight vectors are required for detecting the respective symbols. The weight vector is defined as following equation 2 in general.

$$\underline{w}_i^H \underline{\underline{H}}_j = \begin{cases} 0 & j \geq i \\ 1 & j = i \end{cases}$$

where $\underline{H}_j$ is $j$th column vector of $\underline{H}$. In equation 2, the multiplication result value of the weight vector $\underline{w}_i$ and the column vector $\underline{H}_j$ becomes "1" only when the $i$th weight vector $\underline{w}_i$ is multiplied by the $i$th column vector of matrix $\underline{H}$. In other multiplication cases, the result values become "0." That means the other symbols except for the $i$th symbol are regarded as interferences so as to null out. The symbols are extracted stage by stage in an ordered serial detection process. Thereby, one symbol is detected and afterwards its contribution is subtracted from the received symbol vector. Accordingly, the *condition $j \geq i$* is the case.

The weight vector satisfying equation 2 can be obtained as following procedure.

The symbol vector received through each Rx antenna can be expressed as following equation 3.

<equation 3>

$$\underline{r} = a_1 \underline{\underline{H}}_1 + a_2 \underline{\underline{H}}_2 + \ldots + a_M \underline{\underline{H}}_M$$

The transmitted symbols are received by each Rx antenna through different paths and the received symbol vector is expressed as a linear combination in equation 3.

For example, the first symbol is detected by multiplying the received symbol vector with a weight vector which is able to cancel the second to $M$th symbols. The detection process is repeated M times for extracting the symbols transmitted from M Tx antennas. In order to detect the correct symbols, the weight vectors should be updated appropriately.

The detection algorithm for conventional V-BLAST system can be described simply as following equation 4.

<equation 4>

$$\underline{\underline{G}}_1 = \underline{\underline{H}}^+$$

where + denotes the Moore-Penrose pseudoinverse.

Among the row vectors of the matrix $\underline{\underline{G}}_1$ one of which vector norm is the least is extracted and the K*th* row vector is selected as the weight vector $\underline{w}_k$ for detecting the symbol transmitted by the *K*th Tx antenna.

Thereby, the symbol $a_k$ transmitted by the Kth Tx antenna is detected by multiplying the received vector $\underline{r}$ by the weight vector $\underline{w}_k$ and decoding the symbol with the same modulation scheme (for example, QPSK, QAM, etc.) used in the transmitter.

Once the symbol transmitted by the Kth antenna is detected, the contribution of that symbol is subtracted from the received symbol vector represented by equation 3 as following equation 5.

<equation 5>

$$\underline{r}_2 = \underline{r} - a_k \underline{\underline{H}}_k$$

where $\underline{r}_2$ is the received vector for second updating process.

The second matrix $\underline{\underline{G}}_2$ for obtaining the second weight vector becomes the Moore-Penrose pseudoinverse of matrix $\underline{H}^+$ of which components of Kth row are zeros and can be expressed as following equation 6.

$$\underline{\underline{G}}_2 = \underline{\underline{H}}_k^{+}$$

where $\underline{\underline{H}}_k^{+}$ is the Moore-Penrose pseudoinverse matrix of the matrix $\underline{\underline{H}}^{+}$ of which Kth row components are zeros.

Among the row vectors of the matrix $\underline{\underline{G}}_2$ one of which vector norm is the least is extracted and this *Vth* row vector is selected as the weight vector $\underline{w}_v$ for detecting the symbol transmitted by the *Vth* Tx antenna.

Thereby, the Vth symbol $a_v$ transmitted by Vth transmit antenna is detected by multiplying the received vector $\underline{r}_2$ by the weight vector $w_v$ and decoding the symbol with the same modulation (for example, QPSK, QAM, etc.) used in the transmitter.

Once the Vth symbol is detected, the contribution of the symbol transmitted by the Vth transmit antenna is subtracted from the received symbol vector represented by equation 5 as following equation 7.

<equation 7>

$$\underline{r}_3 = \underline{r}_2 - a_v \underline{\underline{H}}_v$$

where $\underline{r}_3$ is the received vector for third updating process.

This detection process is repeated so as to obtain the respective symbols transmitted by the M Tx antennas.

As explained above, in the MIMO system a serial data stream is split into multiple substreams such that the substreams are simultaneous transmitted through parallel Tx antennas. All the substreams are transmitted in the same frequency band, so spectrum is used very efficiently. The substreams are received by multiple Rx antennas and recovered into original data stream using sophisticated signal processing.

To successfully recover the original data stream from the received substreams, it is required that the substreams maintain their independencies to each other while propagating through multipath between the transmitter and receiver.

However, since there exists more or less correlations between the Tx antennas as well as between the Rx antennas it is difficult to expect that the respective substreams are independently transmitted.

Also, the conventional MIMO system may not provide enough independent propagation paths as much as the number of the Tx antennas due to the limited bandwidth. That is, when the substreams are transmitted by the number of Tx antennas which exceeds a channel capacity, the independencies of the propagation paths of the substreams can not be guaranteed such that the receiver fails to successively receive the respective substreams.

Accordingly, an improved signal processing technique which can process the received signal adaptive to the channel status is required even when the independencies of the propagation paths are broken.

## Disclosure of Invention

The present invention has been made in an effort to solve the above problems. The preamble of the independent claims is based on WO 02/03568.

It is an object of the present invention to provide a MIMO system and method capable of increasing channel capacity and improving reliability of received data by transmitting the data in the forms of split substreams corresponding thereto through multiple propagation paths in consideration of channel status and priorities of the substreams.

To achieve the above object, a method of data communication between two transceivers according to claim 1 is provided.

The data stream includes systematic bits and parity bits and the priority of each data symbol is determined based of a number of the systematic bits contained in the data symbol. The priority becomes higher as the number of the systematic bits increases. The independency of each transmit antenna is determined by correlation with remained transmit antennas. The independency of the transmit antenna become higher as the correlation decreases.

To achieve the above object a system according to claim 30 is provided.

Each data symbol is assigned a priority and each transmit antenna is assigned an independency such that the data symbols are mapped to the transmit antennas in accordance with the priorities of the data symbols and the independencies of the transmit antennas.

The priority of each data symbol is determined according to number of the systematic bits contained in the data symbol, the independency of each transmit antenna is determined on the basis of spatial correlation with the other transmit antennas and/or feedback information provided from a counterpart transceiver. The feedback information includes channel status between the transmit antennas and receive antennas of the counterpart transceiver.

## Brief Description of the Drawings

FIG. 1 is a block diagram illustrating a conventional V-BLAST system as a MIMO system;

FIG. 2 is a block diagram illustrating a MIMO system according to a preferred embodiment of the present invention;

FIG. 3 is a diagram illustrating a turbo code encoder having a code rate of 1/3, adopted to the MIMO system of FIG. 2;

FIG. 4 is a conceptual view for illustrating how the symbols are mapped to respective transmit antennas according to the present invention;

FIG. 5 is a flow chart illustrating a data transmission procedure of the data communication method according to the present invention;

FIG. 6 is a flowchart illustrating how to demultiplex the data stream in FIG. 5;

FIG. 7 is a flowchart illustrating a data reception procedure of the data communication method according to the preferred embodiment of the present invention;

FIG. 8 is a block diagram illustrating a MIMO system according to another preferred embodiment of the present invention;

FIG. 9 is a flowchart illustrating a channel status information feedback procedure of the data communication method according to another preferred embodiment of the present invention.

## Best mode for Carrying Out the Invention

Preferred embodiments of the present invention will be described hereinafter with reference to the accompanying drawings.

FIG. 2 is a block diagram illustrating a MIMO system according to a preferred embodiment of the present invention.

As shown in FIG. 2, the MIMO system of the present invention is assumed including a transmitter 30 equipped with M Tx antennas and a receiver 40 equipped with N Rx antennas, and the number of Rx antennas is greater than or equal to the number of the Tx antennas ($N \geq M$).

In FIG. 2, the transmitter 30 of the MIMO system according to the preferred embodiment of the present invention includes a channel coder 31 for taking user data and adds additional information in order for the receiver to recover the data from the received signal; a plurality of Tx antennas 37; and a signal processing unit 33 for splitting the data stream outputted from the channel coder 31 into one or more substreams and generating symbols from the substreams. The symbols are mapped to appropriate Tx antennas 37 in consideration of channel status associated with the Tx antennas and the priorities of the symbols.

The signal processing unit 33 includes a demultiplexer 35 for splitting the data stream into a plurality of independent substreams and a modulator 36 for encoding each substream into transmit symbol and mapping the transmit symbol to the corresponding Tx antenna 37.

Furthermore, the demultiplexer 35 includes a systematic bit collector 35a and parity bit collector 35b for collecting the systematic bits and parity bits split from the data stream, respectively.

In the above structured transmitter 30, once the user data are inputted to the channel coder 31, the channel coder 31 performs several processes to the input data such as coding, puncturing, formatting, etc. such that the receiver 40 can decode the data from the received data stream even when the received data stream have some errors to a tolerable extent.

In the preferred embodiment of the present invention, turbo code is utilized for channel coding.

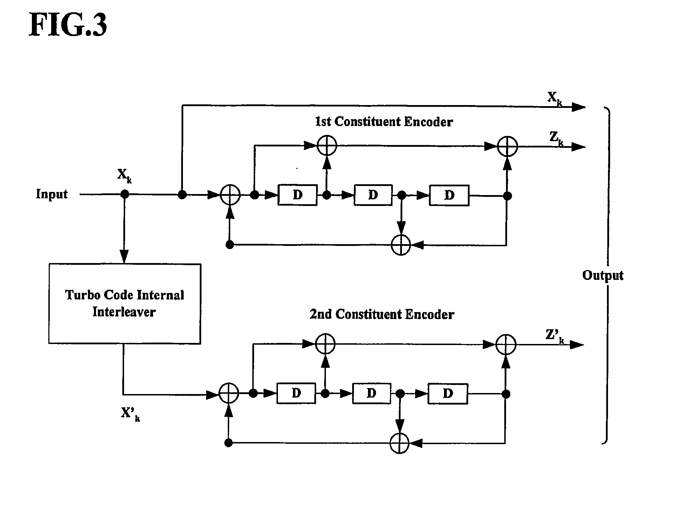

FIG. 3 is a block diagram illustrating a typical turbo code encoder having a code rate of 1/3.

Referring to FIG. 3, the scheme of the turbo code encoder 50 is a Parallel Concatenated Convolutional Code (PCCC) with a pair of 8-state constituent encoders 52a and 52b and one turbo code internal interleaver 54. This type of encoder is specified by 3GPP standard.

Output from the turbo code encoder 50 is $x_1$, $z_1$, $z'_1$, $x_2$, $Z_2$, $z'_2$, ..., $x_K$, $z_K$, $z'_K$ where $x_1$, $x_2$, ..., $x_K$, are the bits inputted to the turbo code encoder 50, K is the number of bits, and $z_1$, $z_2$, ..., $z_k$ and $z'_1$, $z'_2$, ..., $z'_K$ are the bits outputted from a first and second constituent encoders 52a and 52b, respectively. The bit $x_i$ (i=1-K) is called systematic bit and $z_i$ (i=1-K) and $z'_i$ (i=1-K) are called redundancy.

Since the turbo code encoder 50 outputs 3 bits consisting of 1 systematic bit and 2 parity bits each generated by the first and second constituent encoders 52a and 52b when 1 bit is inputted thereto, the code rate of the turbo code encoder 50 is 1/3. Of course, the systematic bit is more important than the parity bits.

As described above, the input data is channel-coded by the channel coder 31 so as to be outputted as a data stream consisting of systematic bits and parity bits. The systematic bits are part of the original data and the parity bits are for error correction at the receiver.

The output data stream of the turbo code encoder 50 is split into more than two substreams by the demultiplexer 35, and each substream is encoded into transmit symbol and mapped to one the Tx antennas 37 by the modulator 36 in consideration of the priorities thereof and the channel status of the Tx antennas 37.

While demultiplexing the data stream into the substreams, the systematic bits and the parity bits are completely separated and collected by the systematic bit collector 35a and parity bit collector 35b. These separately collected systematic bits and parity bits are allocated in different substreams. It is possible to allocate specific number of parity bits at predetermined bit positions of each substream. The substream may have padding bits if the number of bits consisting of the substream is short.

The priority of the symbol is defined by the number of the systematic bits included in the symbol, such that the more the systematic bits are contained in the symbol, the higher the priority of the symbol is.

The symbols having higher priorities are mapped to the Tx antennas 37 that are less fading-correlated, i.e., more independently distributed in fading, than other Tx antennas does.

Accordingly, the symbol having lower priority is mapped to the relatively higher fading-correlated Tx antenna 37.

That is, the symbol-to-Tx antenna mapping is performed in the order from the highest priority symbol-to-lowest fading-correlated Tx antenna to the lowest priority symbol-to-highest fading-correlated Tx antenna.

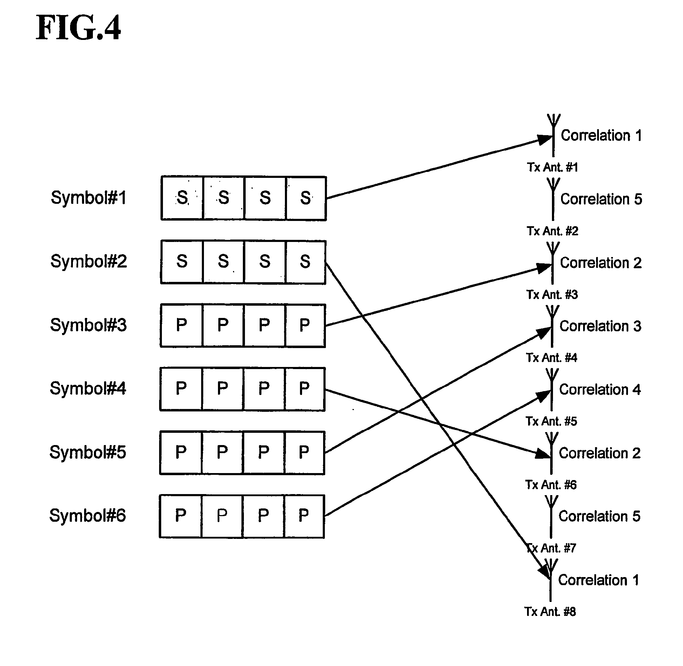

FIG. 4 is a conceptual view for illustrating how the symbols are mapped to respective transmit antennas according to the present invention.

In FIG. 4, it is assumed that 6 symbols are generated by the modulator 36 and there are 8 transmit antennas of which independencies are determined as in FIG 4 based on the feedback information from the receiver.

Among the symbols, symbol#1 and symbol#2 have higher priorities because both the symbol#1 and symbol#2 are consisted of only systematic bits. On the other hand, the symbol#3, symbol#4, symbol#5, and symbol#6 have lower priorities because they are consisted of only parity bits.

Among the 8 transmit antennas, Tx ant #1 to Tx ant #8 have respective correlation levels of 1, 5, 2, 3, 4, 2, 5, and 1 (1 is the lowest correlation level and 5 is the highest correlation level).

Since the symbol#1 and symbol#2 have the higher priorities, the symbol#1 and symbol#2 are mapped to the respective Tx ant. #1 and Tx ant. #8 having the lowest correlation level and the symbol#3 to symbol#6 are orderly mapped to the ant. #3 of correlation level 2, ant. #6 of correlation level 2, ant. #4 of correlation level 3, and ant. #5 of correlation level 4.

After being assigned to the appropriate Tx antennas, the symbols are identically transmitted at the same time so as to be detectibly received by the Rx antennas.

The receiver 40 includes a plurality of Rx antennas 41 for receiving the symbols transmitted from the Tx antennas 37, a detection/demodulation unit 43 for processing the received symbols, and a multiplexer 45 for recovering the originally transmitted data from the processed symbols.

In the above structured receiver 40, once the symbols transmitted from the Tx antennas 37 are received by the Rx antennas 41, the detection/demodulation unit 43 sequentially detects and demodulates separate symbols into substreams using a signal detection algorithm such as a Zero-Forcing (ZF), Minimum-Mean-Square-Error (MMSE), or V-BLAST. After being demodulated, the substreams are reallocated and multiplexed into the original data stream in the transmitted sequences by the multiplexer 45 so as to be outputted as the data stream identical with the originally transmitted data stream.

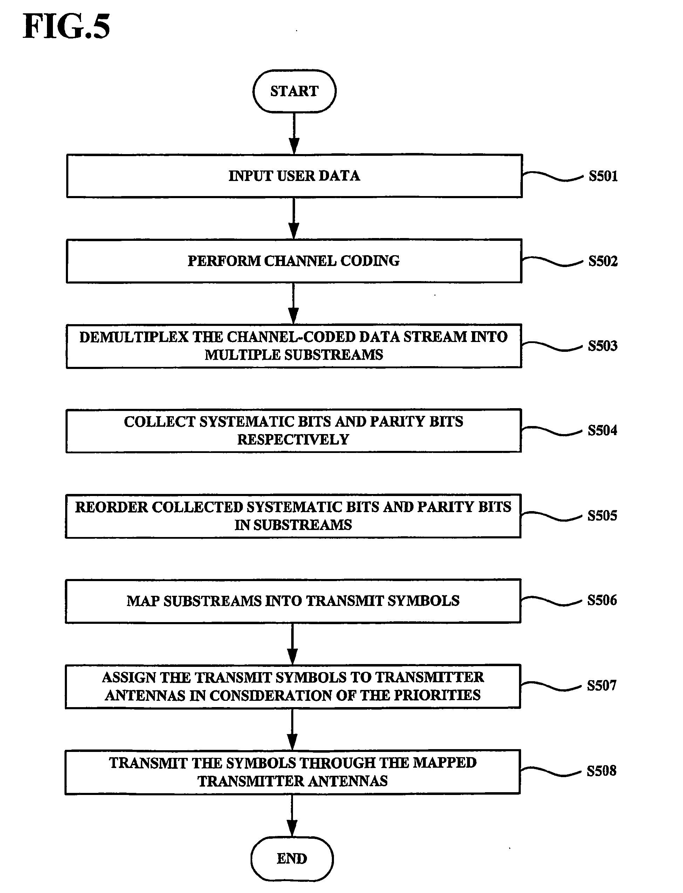

The operation of the above structured MIMO system will be described hereinafter with reference to FIG. 5 to FIG 7.

FIG. 5 is a flowchart illustrating a data transmission procedure of the data communication method according to the preferred embodiment of the present invention.

In FIG. 5, once a single user data is inputted to the channel coder 31 of the transmitter 30 at step S501, the data is channel-coded so as to be outputted as a data stream at step S502. After being channel-coded, an output data stream is demultiplexed into one or more substreams at step S503 and the systematic bits and parity bits consisting of the data stream are separated and collected by the systematic bit collector 35a and parity bit collector 35b at step S504. These collected systematic bits and parity bits are reordered in the substreams at step S505 and each substream is mapped into the transmit symbol at step S506. Then, the transmit symbols are assigned to an appropriated Tx antenna on the basis of the number of systematic bits included in the symbol at step S507. After being assigned to the appropriate Tx antennas, the symbols are transmitted by the Tx antennas at step S508.

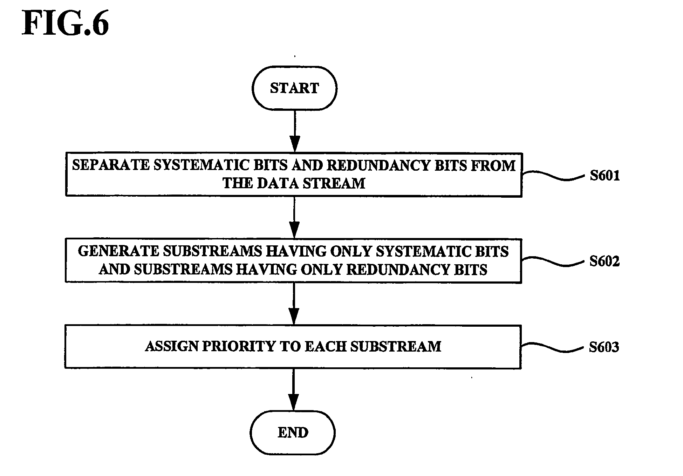

FIG. 6 is a flowchart illustrating how to demultiplex the data stream in FIG. 5. Once the data stream being received from the channel coder 31, the demultiplexer 35 separates the systematic bits and parity bits from the data stream at step S601. Next, the demultiplexer 35 generates systematic substreams formed only with the systematic bits and redundancy substreams formed only with the parity bits at step S602. Consequently, the demultiplexer 35 assigns a priority to each substream according to the number of the systematic bits included in the substream at step S603.

While splitting the data stream into the substreams, the systematic bits and the parity bits are reallocated within each substream. For example, the systematic bits and the parity bits are completely separated so as to be allocated in different substreams. Also, it is possible to allocate specific numbers of systematic bits and parity bits at predetermined bit positions of each substream.

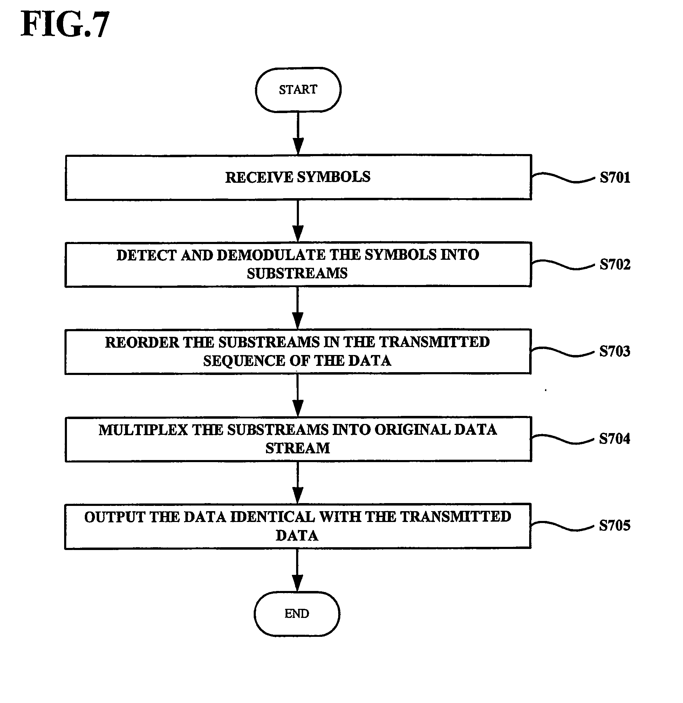

FIG. 7 is a flowchart illustrating a data reception procedure of the data communication method according to the preferred embodiment of the present invention.

In FIG. 7, once the symbols transmitted by the Tx antennas 37 are received through the Rx antennas 41 at step S701, every symbol is detected and demodulated into the substreams by the detection/demodulation unit 43 at step S702 and then reordered in the transmitted sequence of the data stream at step S703. Consequently, the reordered substreams are multiplexed into the data stream by the multiplexer 45 at step S704 so as be outputted as originally transmitted data at step S705.

While reordering the received substreams, the detection/demodulation unit 43 recover the substreams in the state before the systematic bits and the parity bits being reallocated if the systematic bits and parity bits of each substream are reallocated before being transmitted.

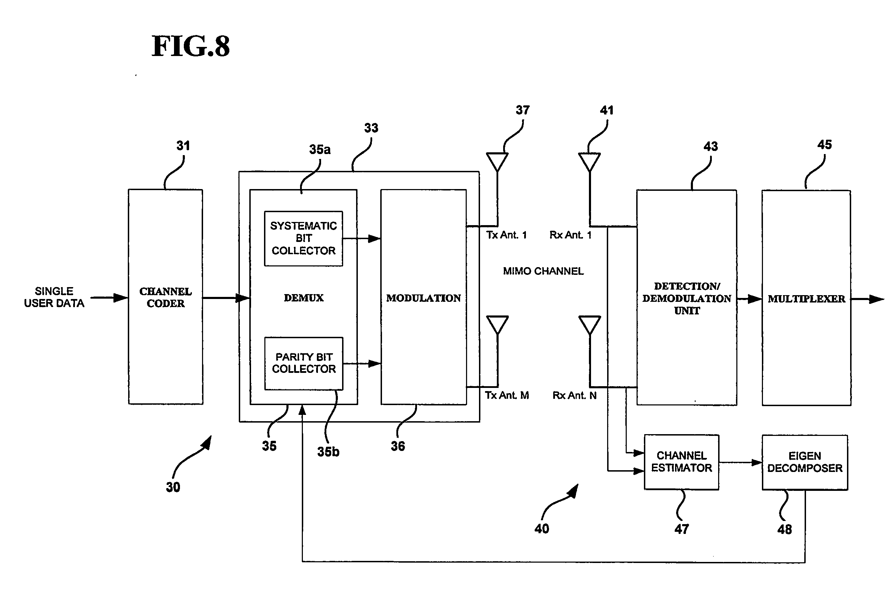

FIG. 8 is a block diagram illustrating a MIMO system according to another preferred embodiment of the present invention.

The MIMO system of second embodiment is similar to that of the first embodiment except for a feedback module of the receiver for providing channel status to the transmitter.

As shown in FIG. 8, the receiver 40 of the MIMO system according to the second embodiment of the present invention further includes a channel estimator 47 for estimating the channel matrix H and an Eigen decomposition unit 48 for decomposing the channel matrix H and calculating the relative eigenvalues of the channels between the transmitter 30 and receiver 40 so as to feedback the eigenvalues to the transmitter 30.

That is, since the transmitter 30 should know the status of forward links between the Tx antennas and the Rx antennas for allocating the transmit symbols having different priorities to the appropriate Tx antennas 37, the receiver 40 estimates the forward channels, calculates the eigenvalues of the forward channels, and transmits the eigenvalues to the transmitter 30 through a feedback channel. Accordingly, the transmitter 30 recognizes the independencies of forward channels based on the eigenvalues received from the receiver such that the transmitter can map the higher priority symbol to the Tx antenna associated with the forward channel having the higher independency

How the forward channel status information is obtained will be explained hereinafter.

To obtain the status information for each forward channel, the receiver estimates the M x N channel matrix $\underline{H}$ between the Tx antennas and Rx antennas. The channel matrix $\underline{H}$ is decomposed for all channels as following.

<equation 8>

$$\underline{\underline{H}}^{H}\,\underline{\underline{H}} => \lambda_1\underline{e}_1 + \lambda_2\underline{e}_2 + ... + \lambda_M\underline{e}_M$$

where $\underline{H}$ itself can not be decomposed because it is not a square matrix. Accordingly, eigen decomposition is led from $\underline{H}^H\underline{H}$. The superscript H is Hermitian operator, and $\lambda_i$ and $e_i$ are respective general eigenvalue and general eigenvector of the matrix $\underline{H}^H\underline{H}$.

Since the eigenvectors are orthogonal to each other, the column vectors of $\underline{E}$, which is the matrix obtained through the eigenvalue decomposition, are also orthogonal. $\underline{E}$ can be decomposed as following equation 9 and the decomposition result is M X M matrix.

<equation 9>

$$\underline{\underline{E}} = \begin{bmatrix}\underline{e}_1 & \underline{e}_2 & \cdots & \underline{e}_M\end{bmatrix}^H \begin{bmatrix} \underline{\lambda}_1 & 0 & \cdots & 0 \\ 0 & \underline{\lambda}_2 & \cdots & 0 \\ \vdots & \vdots & \ddots & \vdots \\ 0 & 0 & \cdots & \underline{\lambda}_M \end{bmatrix} \begin{bmatrix}\underline{e}_1 & \underline{e}_2 & \cdots & \underline{e}_M\end{bmatrix}$$

After obtaining the eigenvalues by this eigen decomposition, the eigenvalues can be ordered from the highest to lowest one. Accordingly, the independencies of the channels between the Tx antennas and the Rx antennas are determined by the eigenvalues corresponding to the respective Tx antennas.

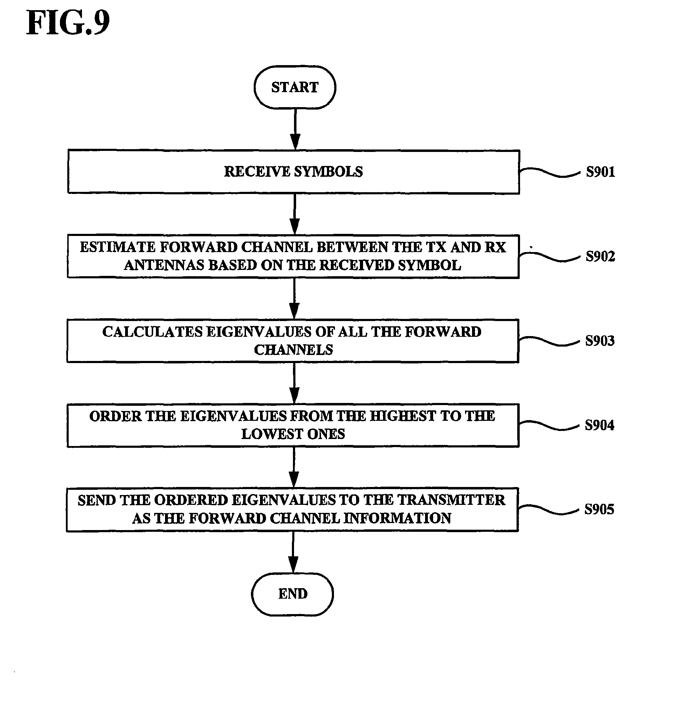

FIG. 9 is a flowchart illustrating a channel status information feedback procedure of the data communication method according to the second preferred embodiment of the present invention.

As shown in FIG. 9, once the receiver receives the transmit symbols at step S901, the channel estimator 47 of the receiver estimates the forward channels between the Tx antennas and Rx antennas using the received symbols and sends the estimation result to the eigen decomposer 48 at step S902. The eigen decomposer 48 calculates the eigenvalues of all the forward channels based on the estimation result received from the channel estimator 47 at step S903. After obtaining the eigenvalues of the forward channels, the eigen decomposer 48 orders the eigenvalues from the greatest to smallest ones at step S904 and sends the ordered eigenvalues to the transmitter as channel status information through a feedback channel at step S905.

Thereby, the transmitter 30 knows the independencies of the forward channels between the Tx antennas and Rx antennas and maps each symbol to appropriate Tx antenna on the basis of the independencies level of the forward channel.

While this invention has been described in connection with what is presently considered to be the most practical and preferred embodiment, it is to be understood that the invention is not limited to the disclosed embodiments, but, on the contrary, Is Intended to cover various modifications and equivalent arrangements included within the scope of the appended claims.

As described above, in the improved MIMO system and method of the present invention, since the user data is split into a plurality of symbols and the symbols are simultaneously transmitted by a plurality of Tx antennas in consideration of the status of the sub-channels between the Tx antennas and Rx antennas and priorities of the symbols, it is possible to improve the data transmission reliability and to increase of the channel capacity, resulting in maximizing system capacity.

**Claims**

1. A method of data communication between two transceivers in multiple-input multiple-output radio communication system, the method comprising:

   simultaneously transmitting one or more data symbols corresponding to a single data stream over a plurality of transmit antennas and selectively mapping the symbols to the antennas based on independencies of the transmit antennas and priorities of the data symbols (S507, S508); and
   receiving the data symbols through a plurality of receive antennas of a second transceiver and recovering the data stream from the received data symbols,
   wherein the data stream includes systematic bits and parity bits, and **characterized in that** the priority of each data symbol is determined based on a number of the systematic bits contained in the data symbol.

2. The method of claim 1, wherein the priority becomes higher as the number of the systematic bits in the data symbol increases.

3. The method of claim 1, wherein the independency of each transmit antenna is determined by correlation with other transmit antennas.

4. The method of claim 3, wherein the independency of a respective transmit antenna becomes higher as the correlation decreases.

5. The method of claim 4, wherein the correlation of a respective transmit antenna is determined on the basis of feedback information from the second transceiver.

6. The method of claim 2, wherein the independency of each transmit antenna is determined by correlation with remained transmit antennas.

7. The method of claim 6, wherein the independency of a respective transmit antenna become higher as the correlation decreases.

8. The method of claim 7, wherein the correlation between the transmit antennas are determined on the basis feedback information from the second transceiver.

9. The method of claim 8, wherein the data symbol having a higher priority is mapped to the transmit antenna having a higher independency.

10. The method of claim 1, wherein the transmitting includes:

   demultiplexing the data stream into one or more substreams;
   mapping the substreams into the data symbols; and
   assigning the data symbols to the transmit antennas.

11. The method of claim 10, wherein the demultiplexing includes:

   separating systematic bits and parity bits contained in the data stream;
   collecting the systematic bits and parity bits respectively; and
   reallocating the systematic bits and parity bits into different substream.

12. The method of claim 10, wherein the mapping includes assigning priorities to the data symbols.

13. The method of claim 12, wherein the priority of the data symbol depends on the number of the systematic bits.

14. The method of claim 13, wherein the priority becomes higher as the number of the systematic bits in the data symbol increases.

15. The method of claim 10, wherein the mapping includes assigning independencies to the transmit antennas.

16. The method of claim 15, wherein the independency is determined on the basis of feedback information from the second transceiver.

17. The method of claim 1, wherein the transmitting includes:

   splitting the data stream into one or more substreams;
   separating the systematic bits and parity bits in the substreams;
   reallocating the systematic bits and parity bits into the substreams so as to generate data symbols;
   assigning priorities to the data symbols according to the number of the systematic bits in data symbols; and
   assigning the data symbols to the transmit antennas according to the priorities of the data symbols.

18. The method of claim 17, wherein the priority becomes higher as the number of the systematic bits in the data symbol increases.

19. The method of claim 17, wherein the independency of each transmit antenna is determined by a correlation with other transmit antennas.

20. The method of claim 19, wherein the independency of a respective transmit antenna becomes higher as the correlation decreases.

21. The method of claim 20, wherein the correlation of a respective transmit antenna is determined on the basis of a position of the transmit antenna in spatial domain.

22. The method of claim 20, wherein the correlation of a respective transmit antenna is determined on the basis of feedback information from the second transceiver.

23. The method of claim 18, wherein the independency of each transmit antenna is determined by a correlation with remained transmit antennas.

24. The method of claim 23, wherein the independency of a respective transmit antenna becomes higher as the correlation decreases.

25. The method of claim 24, wherein the correlation of a respective transmit antenna is determined on the basis of a position of the transmit antenna in spatial domain or/and feedback information from the second transceiver.

26. The method of claim 25, wherein the data symbols are mapped to the transmit antennas in an order from the data symbol having higher priority to the data symbol having lower priority.

27. The method of claim 26, wherein the data symbols are mapped to the transmit antennas in an order from the transmit antenna having higher independency to the transmit antenna having lower independency.

28. The method of claim 27, wherein the feedback information includes eigenvalues of channels between the transmit antennas and receive antennas.

29. The method of claim 28, wherein the eigenvalues are obtained, with the second transceiver, by estimating a channel matrix and decomposing the channel matrix, calculating the relative eigenvalues of the channels.

30. A multiple-input multiple-output radio communication system having at least two transceivers, wherein each transceiver comprising:

a channel coder (31) which takes input data and generates a data stream from the input data;
a signal processing unit (33) which generates one or more data symbols having different priorities from the data stream, wherein the signal processing unit includes a demultiplexer (35) which demultiplexes the data stream into one or more substreams and a modulator (36) which encodes the substreams into the data symbols; and
a plurality of transmit antennas (37) which have different independencies and
simultaneously transmit the data symbols mapped to respective transmit antennas in accordance with the priorities and the independencies, wherein the data symbols are selectively mapped to the transmit antennas in accordance with the priorities of the data symbols and the independencies of the transmit antennas, **characterized in that** the priority of each data symbol is determined on the basis of a number of systematic bits derived from the input data and contained in the data symbol.

31. The system of claim 30, wherein the independency of each transmit antenna is determined on the basis of spatial correlations with remained transmit antennas.

32. The system of claim 30, wherein the independency of each transmit antenna is determined in accordance with feedback information from a counterpart transceiver.

33. The system of claim 31, the data symbols are mapped to the transmit antennas in an order from the data symbol having higher priority and transmit antenna having higher independency to the data symbol having lower priority and transmit antenna having lower independency.

34. The system of claim 32, the data symbols are mapped to the transmit antennas in an order from the data symbol having higher priority and transmit antenna having higher independency to the data symbol having lower priority and transmit antenna having lower independency.

35. The system of claim 30, wherein the demultiplexer includes a splitter which separates systematic bits and parity bits from the data stream.

36. The system of claim 30, wherein the demultiplexer includes a systematic bit collector for collecting the systematic bits.

37. The system of claim 30, wherein the demultiplexer includes a parity bit collector for collecting parity bits.

38. The system of claim 30, therein the demultiplexer includes:

a splitter which separates systematic bits and parity bits from the data stream;
a systematic bit collector for collecting the systematic bits; and
a parity bit collector for collecting parity bits.

39. The system of claim 38, wherein the priority of each data symbol is determined on the basis of number of systematic bits derived from the input data.

40. The system of claim 39, wherein the independency of each transmit antenna is determined on the basis of spatial correlations with other transmit antennas.

**41.** The system of claim 39, wherein the independency of each transmit antenna is determined in accordance with feedback information from a counterpart transceiver.

**42.** The system of claim 40, the data symbols are mapped to the transmit antennas in an order from the data symbol having higher priority and transmit antenna having higher independency to the data symbol having lower priority and transmit antenna having lower independency.

**43.** The system of claim 41, the data symbols are mapped to the transmit antennas in an order from the data symbol having higher priority and transmit antenna having higher independency to the data symbol having lower priority and transmit antenna having lower independency.

**44.** The system of claim 30, wherein the channel coder generates the data stream by adding parity bits to systematic bits derived from the user data; the system further comprising:

a reallocating unit which reallocates the systematic bits into the substreams.

**45.** The system of claim 44, wherein the independency of each transmit antenna is determined on the basis of spatial correlation with the other transmit antennas.

**46.** The system of claim 44, wherein the independency of each transmit antenna is determined on the basis of feedback information provided from a counterpart transceiver.

**47.** The system of claim 46, wherein the feedback information includes channel status between the transmit antennas and receive antennas of the counterpart transceiver.

**48.** The system of claim 30, wherein the channel coder generates a data stream by adding parity bits to systematic bits; the system further comprising:

a splitter which splits systematic bits and parity bits in the data streams; and
a reallocating unit which generates one or more substream by reallocating the systematic bits and the parity bits into the substreams.

**49.** The system of claim 48, wherein the independency of each transmit antenna is determined on the basis of spatial correlation with the other transmit antennas and/or feedback information provided from a counterpart.

**50.** The system of claim 49, wherein the feedback information includes channel status between the transmit antennas and receive antennas of the counterpart.

**Patentansprüche**

**1.** Datenkommunikationsverfahren zwischen zwei Sende-Empfangsgeräten in einem Funkkommunikationssystem mit mehreren Eingängen und mehreren Ausgängen, wobei das Verfahren umfasst:

gleichzeitiges Übertragen eines oder mehrerer Datensymbole, die einem einzelnen Datenstrom entsprechen, über eine Mehrzahl an Übertragungsantennen und
selektives Zuweisen der Symbole zu den Antennen basierend auf Unabhängigkeiten der Übertragungsantennen und Prioritäten der Datensymbole (S507, S508); und
Empfangen der Datensymbole über eine Mehrzahl Empfangsantennen eines zweiten Sende-Empfangsgeräts und Wiederherstellen des Datenstroms aus den empfangenen Datensymbolen,
wobei der Datenstrom systematische Bits und Paritätbits aufweist, **dadurch gekennzeichnet, dass** die Priorität eines jeden Datensymbols basierend auf einer Anzahl der im Datensymbol enthaltenen systematischen Bits bestimmt wird.

**2.** Verfahren nach Anspruch 1, wobei sich die Priorität erhöht, wenn die Anzahl der systematischen Bits im Datensymbol steigt.

**3.** Verfahren nach Anspruch 1, wobei die Unabhängigkeit einer jeden Übertragungsantenne durch Korrelation mit anderen Übertragungsantennen bestimmt wird.

4. Verfahren nach Anspruch 3, wobei sich die Unabhängigkeit einer entsprechenden Übertragungsantenne mit abnehmender Korrelation erhöht.

5. Verfahren nach Anspruch 4, wobei die Korrelation einer entsprechenden Übertragungsantenne basierend auf Rückmeldungsinformation vom zweiten Sende-Empfangsgerät bestimmt wird.

6. Verfahren nach Anspruch 2, wobei die Unabhängigkeit einer jeden Übertragungsantenne durch Korrelation mit verbleibenden Übertragungsantennen bestimmt wird.

7. Verfahren nach Anspruch 6, wobei sich die Unabhängigkeit einer entsprechenden Übertragungsantenne mit abnehmender Korrelation erhöht.

8. Verfahren nach Anspruch 7, wobei die Korrelation zwischen den Übertragungsantennen basierend auf Rückmeldungsinformation vom zweiten Sende-Empfangsgerät bestimmt wird.

9. Verfahren nach Anspruch 8, wobei das Datensymbol mit einer höheren Priorität der Übertragungsantenne mit einer höheren Unabhängigkeit zugeordnet wird.

10. Verfahren nach Anspruch 1, wobei das Übertragen umfasst:

Demultiplexen des Datenstroms in einen oder mehrere Unterströme;
Zuordnen der Unterströme zu den Datensymbolen; und
Zuweisen der Datensymbole an die Übertragungsantennen.

11. Verfahren nach Anspruch 10, wobei das Demultiplexen umfasst:

Trennen im Datenstrom enthaltener systematischer Bits und Paritätbits; Sammeln der systematischen Bits und der Paritätsbits; und
Neuzuweisen der systematischen Bits und Paritätbits **zu verschiedenen Unterströmen.**

12. Verfahren nach Anspruch 10, wobei die Zuordnung das Zuweisen von Prioritäten zu den Datensymbolen umfasst.

13. Verfahren nach Anspruch 12, wobei die Priorität des Datensymbols von der Anzahl der systematischen Bits abhängt.

14. Verfahren nach Anspruch 13, wobei sich die Priorität erhöht, wenn die Anzahl der systematischen Bits im Datensymbol steigt.

15. Verfahren nach Anspruch 10, wobei die Zuordnung das Zuweisen von Unabhängigkeiten zu den Übertragungsantennen umfasst.

16. Verfahren nach Anspruch 15, wobei die Unabhängigkeit basierend auf Rückmeldungsinformation vom zweiten Sende-Empfangsgerät bestimmt wird.

17. Verfahren gemäß Anspruch 1, wobei das Übertragen umfasst:

Aufteilen des Datenstroms in einen oder mehrere Unterströme;
Trennen der systematischen Bits und der Paritätbits in den Unterströmen;
Neuzuweisen der systematischen Bits und Paritätbits **zu den Unterströmen,** um so Datensymbole zu erzeugen;
Zuweisen von Prioritäten zu den Datensymbolen gemäß der Anzahl der systematischen Bits in den Datensymbolen; und
Zuweisen der Datensymbole zu den Übertragungsantennen gemäß den Prioritäten der Datensymbole.

18. Verfahren nach Anspruch 17, wobei sich die Priorität erhöht, wenn die Anzahl der systematischen Bits im Datensymbol steigt.

19. Verfahren nach Anspruch 17, wobei die Unabhängigkeit einer jeden Übertragungsantenne durch eine Korrelation mit anderen Übertragungsantennen bestimmt wird.

20. Verfahren nach Anspruch 19, wobei sich die Unabhängigkeit einer entsprechenden Übertragungsantenne mit abnehmender Korrelation erhöht.

21. Verfahren nach Anspruch 20, wobei die Korrelation einer entsprechenden Übertragungsantenne basierend auf einer Position der Übertragungsantenne im Raumbereich bestimmt wird.

22. Verfahren nach Anspruch 20, wobei die Korrelation einer entsprechenden Übertragungsantenne basierend auf Rückmeldungsinformation vom zweiten Sende-Empfangsgerät bestimmt wird.

23. Verfahren nach Anspruch 18, wobei die Unabhängigkeit einer jeden Übertragungsantenne durch eine Korrelation mit verbleibenden Übertragungsantennen bestimmt wird.

24. Verfahren nach Anspruch 23, wobei sich die Unabhängigkeit einer entsprechenden Übertragungsantenne mit abnehmender Korrelation erhöht.

25. Verfahren nach Anspruch 24, wobei die Korrelation einer entsprechenden Übertragungsantenne basierend auf einer Position der Übertragungsantenne im Raumbereich und/oder auf Rückmeldungsinformation vom zweiten Sende-Empfangsgerät bestimmt wird.

26. Verfahren nach Anspruch 25, wobei die Datensymbole den Übertragungsantennen in einer Reihenfolge vom Datensymbol mit höherer Priorität zum Datensymbol mit niedrigerer Priorität zugeordnet werden.

27. Verfahren nach Anspruch 26, wobei die Datensymbole den Übertragungsantennen in einer Reihenfolge von der Übertragungsantenne mit höherer Unabhängigkeit zu der Übertragungsantenne mit geringerer Unabhängigkeit zugeordnet werden.

28. Verfahren nach Anspruch 27, wobei die Rückmeldungsinformation Eigenwerte der Kanäle zwischen den Übertragungsantennen und Empfangsantennen aufweist.

29. Verfahren nach Anspruch 28, wobei die Eigenwerte mit dem zweiten Sende-Empfangsgerät durch Schätzen einer Kanalmatrix und Zerlegen der Kanalmatrix und Berechnen der relativen Eigenwerte der Kanäle erhalten werden.

30. Funkkommunikationssystem mit mehreren Eingängen und mehreren Ausgängen und mit wenigstens zwei Sende-Empfangsgeräten, wobei jedes Sende-Empfangsgerät umfasst:

   einen Kanalkodierer (31), der Eingabedaten annimmt und aus den Eingabedaten einen Datenstrom erzeugt;
   eine Signalverarbeitungseinheit (33), die ein oder mehrere Datensymbole mit unterschiedlichen Prioritäten aus dem Datenstrom erzeugt, wobei die Signalverarbeitungseinheit einen Demultiplexer (35) aufweist, der den Datenstrom in einen oder mehrere Unterströme aufteilt, und einen Modulator (36), der die Unterströme in die Datensymbole kodiert; und
   eine Mehrzahl Übertragungsantennen (37), die unterschiedliche Unabhängigkeiten besitzen und gleichzeitig die Datensymbole übertragen, die den entsprechenden Übertragungsantennen gemäß den Prioritäten und den Unabhängigkeiten zugeordnet wurden, wobei die Datensymbole selektiv den Übertragungsantennen gemäß den Prioritäten der Datensymbole und den Unabhängigkeiten der Übertragungsantennen zugeordnet werden, **dadurch gekennzeichnet, dass** die Priorität eines jeden Datensymbols basierend auf einer Anzahl systematischer Bits bestimmt wird, die aus den Eingabedaten abgeleitet werden und im Datensymbol enthalten sind.

31. System nach Anspruch 30, wobei die Unabhängigkeit einer jeden Übertragungsantenne basierend auf räumlichen Korrelationen mit verbleibenden Übertragungsantennen bestimmt wird.

32. System nach Anspruch 30, wobei die Unabhängigkeit einer jeden Übertragungsantenne gemäß Rückmeldungsinformation von einem Partner-Sende-Empfangsgerät bestimmt wird.

33. System nach Anspruch 31, wobei die Datensymbole den Übertragungsantennen in einer Reihenfolge vom Datensymbol mit höherer Priorität und von der Übertragungsantenne mit höherer Unabhängigkeit zum Datensymbol mit geringerer Priorität und zu der Übertragungsantenne mit geringerer Unabhängigkeit zugeordnet werden.

**34.** System nach Anspruch 32, wobei die Datensymbole den Übertragungsantennen in einer Reihenfolge vom Datensymbol mit höherer Priorität und von der Übertragungsantenne mit höherer Unabhängigkeit zum Datensymbol mit geringerer Priorität und zu der Übertragungsantenne mit geringerer Unabhängigkeit zugeordnet werden.

**35.** System nach Anspruch 30, wobei der Demultiplexer einen Splitter enthält, der systematische Bits und Paritätsbits aus dem Datenstrom trennt.

**36.** System nach Anspruch 30, wobei der Demultiplexer einen Sammler für systematische Bits enthält, der die systematischen Bits sammelt.

**37.** System nach Anspruch 30, wobei der Demultiplexer einen Paritätsbit-Sammler enthält, der die Paritätbits sammelt.

**38.** System nach Anspruch 30, wobei der Demultiplexer umfasst:

einen Splitter, der systematische Bits und Paritätsbits aus dem Datenstrom trennt;
einen Sammler für systematische Bits zum Sammeln der systematischen Bits; und
einen Paritätsbit-Sammler zum Sammeln der Paritätbits.

**39.** System nach Anspruch 38, wobei die Priorität eines jeden Datensymbols basierend auf der Anzahl systematischer Bits bestimmt wird, die aus den Eingabedaten abgeleitet werden.

**40.** System nach Anspruch 39, wobei die Unabhängigkeit einer jeden Übertragungsantenne basierend auf räumlichen Korrelationen mit anderen Übertragungsantennen bestimmt wird.

**41.** System nach Anspruch 39, wobei die Unabhängigkeit einer jeden Übertragungsantenne gemäß Rückmeldungsinformation von einem Partner-Sende-Empfangsgerät bestimmt wird.

**42.** System nach Anspruch 40, wobei die Datensymbole den Übertragungsantennen in einer Reihenfolge vom Datensymbol mit höherer Priorität und von der Übertragungsantenne mit höherer Unabhängigkeit zum Datensymbol mit geringerer Priorität und zu der Übertragungsantenne mit geringerer Unabhängigkeit zugeordnet werden.

**43.** System nach Anspruch 41, wobei die Datensymbole den Übertragungsantennen in einer Reihenfolge vom Datensymbol mit höherer Priorität und von der Übertragungsantenne mit höherer Unabhängigkeit zum Datensymbol mit geringerer Priorität und zu der Übertragungsantenne mit geringerer Unabhängigkeit zugeordnet werden.

**44.** System nach Anspruch 30, wobei der Kanalkodierer den Datenstrom durch Hinzufügen von Paritätsbits zu systematischen Bits erzeugt, die aus den Benutzerdaten abgeleitet wurden, wobei das System weiterhin umfasst:

eine Neuzuteilungseinheit, die die systematischen Bits in die Unterströme neu zuordnet.

**45.** System nach Anspruch 44, wobei die Unabhängigkeit einer jeden Übertragungsantenne basierend auf räumlicher Korrelation mit den anderen Übertragungsantennen bestimmt wird.

**46.** System nach Anspruch 44, wobei die Unabhängigkeit einer jeden Übertragungsantenne basierend auf von einem Partner-Sende-Empfangsgerät bereitgestellter Rückmeldungsinformation bestimmt wird.

**47.** System nach Anspruch 46, wobei die Rückmeldungsinformation einen Kanalstatus zwischen den Übertragungsantennen und Empfangsantennen des Partner-Sende-Empfangsgeräts enthält.

**48.** System nach Anspruch 30, wobei der Kanalkodierer einen Datenstrom durch Hinzufügen von Paritätsbits zu systematischen Bits erzeugt, wobei das System weiterhin umfasst:

einen Splitter, der systematische Bits und Paritätsbits in den Datenströmen trennt; und
eine Neuzuweisungseinheit, die einen oder mehrere Unterströme durch Neuzuweisen der systematischen Bits und der Paritätbits **in die Unterströme** erzeugt.

**49.** System nach Anspruch 48, wobei die Unabhängigkeit einer jeden Übertragungsantenne basierend auf räumlicher Korrelation mit den anderen Übertragungsantennen und/oder auf von einem Partner bereitgestellter Rückmeldungsinformation bestimmt wird.

**50.** System nach Anspruch 49, wobei die Rückmeldungsinformation einen Kanalstatus zwischen den Übertragungsantennen und Empfangsantennen des Partners enthält.

## Revendications

**1.** Procédé de communication de données entre deux émetteurs-récepteurs dans un système de radiocommunication à entrée multiple sortie multiple, le procédé comprenant les étapes consistant à:

transmettre simultanément un ou plusieurs symboles de données correspondant à un flux de données unique sur une pluralité d'antennes de transmission et mettre sélectivement en correspondance les symboles avec les antennes sur la base des indépendances des antennes de transmission et des priorités des symboles de données (S507, S508); et
recevoir les symboles de données par l'intermédiaire d'une pluralité d'antennes de réception d'un deuxième émetteur-récepteur et récupérer le flux de données à partir des symboles de données reçus,
dans lequel le flux de données comprend des bits systématiques et des bits de parité, et **caractérisé en ce que** la priorité de chaque symbole de données est déterminée sur la base d'un nombre de bits systématiques contenus dans le symbole de données.

**2.** Procédé selon la revendication 1, dans lequel la priorité devient plus élevée à mesure que le nombre de bits systématiques dans le symbole de données augmente.

**3.** Procédé selon la revendication 1, dans lequel l'indépendance de chaque antenne de transmission est déterminée par corrélation avec les autres antennes de transmission.

**4.** Procédé selon la revendication 3, dans lequel l'indépendance d'une antenne de transmission respective devient plus élevée à mesure que la corrélation diminue.

**5.** Procédé selon la revendication 4, dans lequel la corrélation d'une antenne de transmission respective est déterminée sur la base d'informations de retour provenant du deuxième émetteur-récepteur.

**6.** Procédé selon la revendication 2, dans lequel l'indépendance de chaque antenne de transmission est déterminée par corrélation avec les antennes de transmission restantes.

**7.** Procédé selon la revendication 6, dans lequel l'indépendance d'une antenne de transmission respective devient plus élevée à mesure que la corrélation diminue.

**8.** Procédé selon la revendication 7, dans lequel la corrélation entre les antennes de transmission est déterminée sur la base des informations de retour provenant du deuxième émetteur-récepteur.

**9.** Procédé selon la revendication 8, dans lequel le symbole de données présentant une priorité plus élevée est mis en correspondance avec l'antenne de transmission présentant l'indépendance la plus élevée.

**10.** Procédé selon la revendication 1, dans lequel l'étape de transmission comprend les étapes consistant à:

démultiplexer le flux de données en un ou plusieurs sous-flux binaires;
mettre en correspondance les sous-flux binaires dans les symboles de données; et
attribuer les symboles de données aux antennes de transmission.

**11.** Procédé selon la revendication 10, dans lequel l'étape de démultiplexage comprend les étapes consistant à:

séparer les bits systématiques et les bits de parité contenus dans le flux de données;
collecter les bits systématiques et les bits de parité, respectivement; et
réattribuer les bits systématiques et les bits de parité dans des sous-flux binaires différents.

**12.** Procédé selon la revendication 10, dans lequel l'étape de mise en correspondance comprend l'étape consistant à attribuer des priorités aux symboles de données.

**13.** Procédé selon la revendication 12, dans lequel la priorité des symboles de données dépend du nombre de bits systématiques.

**14.** Procédé selon la revendication 13, dans lequel la priorité devient plus élevée à mesure que le nombre de bits systématiques dans le symbole de données augmente.

**15.** Procédé selon la revendication 10, dans lequel l'étape de mise en correspondance comprend l'étape consistant à attribuer des indépendances aux antennes de transmission.

**16.** Procédé selon la revendication 15, dans lequel l'indépendance est déterminée sur la base des informations de retour provenant du deuxième émetteur-récepteur.

**17.** Procédé selon la revendication 1, dans lequel l'étape de transmission comprend les étapes consistant à:

diviser le flux de données en un ou plusieurs sous-flux binaires;
séparer les bits systématiques et les bits de parité dans les sous-flux binaires;
réattribuer les bits systématiques et les bits de parité dans les sous-flux binaires de façon à générer des symboles de données;
attribuer des priorités aux symboles de données conformément au nombre de bits systématiques dans les symboles de données; et
attribuer les symboles de données aux antennes de transmission conformément aux priorités des symboles de données.

**18.** Procédé selon la revendication 17, dans lequel la priorité devient plus élevée à mesure que le nombre de bits systématiques dans le symbole de données augmente.

**19.** Procédé selon la revendication 17, dans lequel l'indépendance de chaque antenne de transmission est déterminée par une corrélation avec les autres antennes de transmission.

**20.** Procédé selon la revendication 19, dans lequel l'indépendance d'une antenne de transmission respective devient plus élevée à mesure que la corrélation diminue.

**21.** Procédé selon la revendication 20, dans lequel la corrélation d'une antenne de transmission respective est déterminée sur la base d'une position de l'antenne de transmission dans le domaine spatial.

**22.** Procédé selon la revendication 20, dans lequel la corrélation d'une antenne de transmission respective est déterminée sur la base d'une information de retour provenant du deuxième émetteur-récepteur.

**23.** Procédé selon la revendication 18, dans lequel l'indépendance de chaque antenne de transmission est déterminée par une corrélation avec les antennes de transmission restantes.

**24.** Procédé selon la revendication 23, dans lequel l'indépendance d'une antenne de transmission respective devient plus élevée à mesure que la corrélation diminue.

**25.** Procédé selon la revendication 24, dans lequel la corrélation d'une antenne de transmission respective est déterminée sur la base d'une position de l'antenne de transmission dans un domaine spatial ou/et des informations de retour provenant du deuxième émetteur-récepteur.

**26.** Procédé selon la revendication 25, dans lequel les symboles de données sont mis en correspondance avec les antennes de transmission dans un ordre allant du symbole de données présentant la priorité la plus élevée au symbole de données présentant la priorité la plus faible.

**27.** Procédé selon la revendication 26, dans lequel les symboles de données sont mis en correspondance avec les antennes de transmission dans un ordre allant de l'antenne de transmission présentant l'indépendance la plus élevée à l'antenne de transmission présentant l'indépendance la plus faible.

**28.** Procédé selon la revendication 27, dans lequel les informations de retour contiennent des valeurs propres de canaux entre les antennes de transmission et les antennes de réception.

**29.** Procédé selon la revendication 28, dans lequel les valeurs propres sont obtenues, avec le deuxième émetteur-récepteur, en estimant une matrice de canal et en décomposant la matrice de canal, en calculant les valeurs propres relatives des canaux.

**30.** Système de radiocommunication à entrée multiple sortie multiple comportant au moins deux émetteurs-récepteurs, dans lequel chaque émetteur-récepteur comprend:

un codeur de canal (31) qui prend les données d'entrée et génère un flux de données à partir des données d'entrée;

une unité de traitement de signal (33) qui génère un ou plusieurs symboles de données présentant différentes priorités à partir du flux de données, dans lequel l'unité de traitement de signal comprend un démultiplexeur (35) qui démultiplexe le flux de données en un ou plusieurs sous-flux binaires et un démodulateur (36) qui code les sous-flux binaires en symboles de données; et

une pluralité d'antennes de transmission (37) qui présentent des indépendances différentes et transmettent simultanément les symboles de données mis en correspondance avec les antennes de transmission respectives conformément aux priorités et aux indépendances, dans lequel les symboles de données sont sélectivement mis en correspondance avec les antennes de transmission conformément aux priorités des symboles de données et aux indépendances des antennes de transmission, **caractérisé en ce que** la priorité de chaque symbole de données est déterminée sur la base d'un nombre de bits systématiques dérivés des données d'entrée et contenus dans le symbole de données.

**31.** Système selon la revendication 30, dans lequel l'indépendance de chaque antenne de transmission est déterminée sur la base des corrélations spatiales avec les antennes de transmission restantes.

**32.** Système selon la revendication 30, dans lequel l'indépendance de chaque antenne de transmission est déterminée conformément aux informations de retour provenant d'un émetteur-récepteur de contrepartie.

**33.** Système selon la revendication 31, dans lequel les symboles de données sont mis en correspondance avec les antennes de transmission dans un ordre allant du symbole de données présentant la priorité la plus élevée et des antennes de transmission présentant l'indépendance la plus élevée au symbole de données présentant la priorité la plus faible et à l'antenne de transmission présentant l'indépendance la plus faible.

**34.** Système selon la revendication 32, dans lequel les symboles de données sont mis en correspondance avec les antennes de transmission dans un ordre allant du symbole de données présentant la priorité la plus élevée et de l'antenne de transmission présentant l'indépendance la plus élevée au symbole de données présentant la priorité la plus faible et à l'antenne de transmission présentant l'indépendance la plus faible.

**35.** Système selon la revendication 30, dans lequel le démultiplexeur comprend un séparateur qui sépare les bits systématiques et les bits de parité du flux de données.

**36.** Système selon la revendication 30, dans lequel le démultiplexeur leur comprend un collecteur de bits systématiques destiné à collecter les bits systématiques.

**37.** Système selon la revendication 30, dans lequel le démultiplexeur comprend un collecteur de bits de parité destiné à collecter les bits de parité.

**38.** Système selon la revendication 30, dans lequel le démultiplexeur comprend:

un séparateur qui sépare les bits systématiques et les bits de parité du flux de données;
un collecteur de bits systématiques destiné à collecter les bits systématiques ; et
un collecteur de bits de parité destiné à collecter les bits de parité.

**39.** Système selon la revendication 38, dans lequel la priorité de chaque symbole de données est déterminée sur la base du nombre de bits systématiques dérivés des données d'entrée.

**40.** Système selon la revendication 39, dans lequel l'indépendance de chaque antenne de transmission est déterminée sur la base des corrélations spatiales avec les autres antennes de transmission.

**41.** Système selon la revendication 39, dans lequel l'indépendance de chaque antenne de transmission est déterminée conformément aux informations de retour provenant d'un émetteur-récepteur de contrepartie.

**42.** Système selon la revendication 40, dans lequel les symboles de données sont mis en correspondance avec les antennes de transmission dans un ordre allant du symbole de données présentant la priorité la plus élevée et de l'antenne de transmission présentant l'indépendance la plus élevée au symbole de données présentant la priorité la plus faible et à l'antenne de transmission présentant l'indépendance la plus faible.

**43.** Système selon la revendication 41, dans lequel les symboles de données sont mis en correspondance avec les antennes de transmission dans un ordre allant du symbole de données présentant la priorité la plus élevée et de l'antenne de transmission présentant l'indépendance la plus élevée au symbole de données présentant la priorité la plus faible et à l'antenne de transmission présentant l'indépendance la plus faible.

**44.** Système selon la revendication 30,
dans lequel le codeur de canal génère le flux de données en ajoutant les bits de parité aux bits systématiques dérivés des données d'utilisateur; le système comprenant en outre:

une unité de réattribution qui réattribue les bits systématiques dans les sous-flux binaires.

**45.** Système selon la revendication 44, dans lequel l'indépendance de chaque antenne de transmission est déterminée sur la base de la corrélation spatiale avec les autres antennes de transmission.

**46.** Système selon la revendication 44, dans lequel l'indépendance de chaque antenne de transmission est déterminée sur la base des informations de retour délivrées depuis un émetteur-récepteur de contrepartie.

**47.** Système selon la revendication 46, dans lequel les informations de retour comprennent l'état du canal entre les antennes de transmission et les antennes de réception de l'émetteur-récepteur de contrepartie.

**48.** Système selon la revendication 30,
dans lequel le codeur de canal génère un flux de données en ajoutant les bits de parité aux bits systématiques ; le système comprenant en outre:

un séparateur qui sépare les bits systématiques et les bits de parité dans les flux de données; et
unité de réattribution qui génère un ou plusieurs sous-flux binaires en réattribuant les bits systématiques et les bits de parité dans les sous-flux binaires.

**49.** Système selon la revendication 48, dans lequel l'indépendance de chaque antenne de transmission est déterminée sur la base de la corrélation spatiale avec les autres antennes de transmission et/ou les informations de retour délivrées depuis une contrepartie.

**50.** Système selon la revendication 49, dans lequel les informations de retour comprennent l'état du canal entre les antennes de transmission et les antennes de réception de la contrepartie.

# FIG.1

# FIG.2

SINGLE USER DATA → CHANNEL CODER (31) → DEMUX (35) [SYSTEMATIC BIT COLLECTOR (35a), PARITY BIT COLLECTOR (35b)] → MODULATOR (36) → Tx Ant. 1 / Tx Ant. M (37) → MIMO CHANNEL → Rx Ant. 1 / Rx Ant. N (41) → DETECTION/DEMODULATION UNIT (43) → MUX (45)

30     33     40

EP 1 523 812 B1

# FIG.3

1st Constituent Encoder

2nd Constituent Encoder

Turbo Code Internal Interleaver

Input

Output

# FIG.4

| | | | | |
|---|---|---|---|---|
| Symbol#1 | S | S | S | S |
| Symbol#2 | S | S | S | S |
| Symbol#3 | P | P | P | P |
| Symbol#4 | P | P | P | P |
| Symbol#5 | P | P | P | P |
| Symbol#6 | P | P | P | P |

Correlation 1

Tx Ant. #1

Correlation 5

Tx Ant. #2

Correlation 2

Tx Ant. #3

Correlation 3

Tx Ant. #4

Correlation 4

Tx Ant. #5

Correlation 2

Tx Ant. #6

Correlation 5

Tx Ant. #7

Correlation 1

Tx Ant. #8

# FIG.5

START

↓

| INPUT USER DATA | S501 |

↓

| PERFORM CHANNEL CODING | S502 |

↓

| DEMULTIPLEX THE CHANNEL-CODED DATA STREAM INTO MULTIPLE SUBSTREAMS | S503 |

| COLLECT SYSTEMATIC BITS AND PARITY BITS RESPECTIVELY | S504 |

| REORDER COLLECTED SYSTEMATIC BITS AND PARITY BITS IN SUBSTREAMS | S505 |

| MAP SUBSTREAMS INTO TRANSMIT SYMBOLS | S506 |

↓

| ASSIGN THE TRANSMIT SYMBOLS TO TRANSMITTER ANTENNAS IN CONSIDERATION OF THE PRIORITIES | S507 |

↓

| TRANSMIT THE SYMBOLS THROUGH THE MAPPED TRANSMITTER ANTENNAS | S508 |

↓

END

# FIG.6

START

↓

| SEPARATE SYSTEMATIC BITS AND REDUNDANCY BITS FROM THE DATA STREAM | S601 |

↓

| GENERATE SUBSTREAMS HAVING ONLY SYSTEMATIC BITS AND SUBSTREAMS HAVING ONLY REDUNDANCY BITS | S602 |

↓

| ASSIGN PRIORITY TO EACH SUBSTREAM | S603 |

↓

END

# FIG.7

```
        ┌─────────────┐
        │    START    │
        └─────────────┘
               │
               ▼
┌──────────────────────────────────┐
│         RECEIVE SYMBOLS          │────── S701
└──────────────────────────────────┘
               │
               ▼
┌──────────────────────────────────┐
│  DETECT AND DEMODULATE THE SYMBOLS INTO │────── S702
│            SUBSTREAMS            │
└──────────────────────────────────┘
               │
               ▼
┌──────────────────────────────────┐
│  REORDER THE SUBSTREAMS IN THE TRANSMITTED │────── S703
│        SEQUENCE OF THE DATA       │
└──────────────────────────────────┘
               │
               ▼
┌──────────────────────────────────┐
│  MULTIPLEX THE SUBSTREAMS INTO ORIGINAL DATA │────── S704
│             STREAM              │
└──────────────────────────────────┘
               │
               ▼
┌──────────────────────────────────┐
│  OUTPUT THE DATA IDENTICAL WITH THE TRANSMITTED │────── S705
│              DATA               │
└──────────────────────────────────┘
               │
               ▼
        ┌─────────────┐
        │     END     │
        └─────────────┘
```

**FIG.8**

SINGLE USER DATA → CHANNEL CODER (31) → DEMUX (33) [SYSTEMATIC BIT COLLECTOR (35a), PARITY BIT COLLECTOR (35b), 35] → MODULATION (36) → Tx Ant. 1 (37), Tx Ant. M → MIMO CHANNEL → Rx Ant. 1 (41), Rx Ant. N → DETECTION/DEMODULATION UNIT (43) → MULTIPLEXER (45)

CHANNEL ESTIMATOR (47) → EIGEN DECOMPOSER (48)

30, 40

# FIG.9

```
                    ┌─────────────┐
                    │    START    │
                    └──────┬──────┘
                           │
                           ▼
    ┌──────────────────────────────────────────────┐
    │              RECEIVE SYMBOLS                   │────  S901
    └──────────────────────┬───────────────────────┘
                           │
                           ▼
    ┌──────────────────────────────────────────────┐
    │ ESTIMATE FORWARD CHANNEL BETWEEN THE TX AND RX│────  S902
    │   ANTENNAS BASED ON THE RECEIVED SYMBOL        │
    └──────────────────────┬───────────────────────┘
                           │
                           ▼
    ┌──────────────────────────────────────────────┐
    │   CALCULATES EIGENVALUES OF ALL THE FORWARD    │────  S903
    │                 CHANNELS                       │
    └──────────────────────┬───────────────────────┘
                           │
                           ▼
    ┌──────────────────────────────────────────────┐
    │  ORDER THE EIGENVALUES FROM THE HIGHEST TO THE │────  S904
    │                 LOWEST ONES                    │
    └──────────────────────┬───────────────────────┘
                           │
                           ▼
    ┌──────────────────────────────────────────────┐
    │ SEND THE ORDERED EIGENVALUES TO THE TRANSMITTER│────  S905
    │    AS THE FORWARD CHANNEL INFORMATION          │
    └──────────────────────┬───────────────────────┘
                           │
                           ▼
                    ┌─────────────┐
                    │     END     │
                    └─────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0203568 A